# EUROPEAN PATENT APPLICATION

(11) **EP 2 992 946 A1**
(43) Date of publication of application: **09.03.2016**
(21) Application number: 14183977.9
(22) Date of filing: 08.09.2014
(51) Int. Cl.: B01D 61/02, B01D 61/06, B01D 61/08, B01D 61/12

(54) **Apparatus for purifying a liquid and method of operating such an apparatus**

(71) Applicant: Brita GmbH, 65232 Taunusstein (DE)
(72) Inventor: Köhler, André, 56237 Deesen (DE)
(74) Representative: van Lookeren Campagne, Constantijn August

(57) **Abstract**

An apparatus for purifying a liquid includes a cross-flow filtration device (4) having an inlet (5), an outlet (7) for filtrate and an outlet (6) for retentate. It also includes an accumulator (15), including a first reservoir (16) for receiving filtrate and a second reservoir (17) for receiving a liquid, the accumulator (15) including a barrier (20), separating the first reservoir (16) from the second reservoir, of which at least a part is movable to reduce a pressure difference between the first and second reservoirs (16, 17). A flow regulating device (10) is arranged, in a closed configuration, to prevent and, in an open configuration, to permit a flow of liquid from the inlet (5) through the filtration device (4) and the filtrate outlet (7) to a filtrate conduit section (11,13) in fluid communication with the first reservoir (16). The flow regulating device (10) is arranged to switch to the open configuration when a value of a control variable drops below a first value and to switch to the closed configuration when the value rises above a second value equal to at least the first value. The control variable corresponds to at least one of a measure of an amount of filtrate in the accumulator (15) and a pressure of filtrate in a section of the apparatus including the first reservoir (16) and the filtrate conduit section (11,13). A flow regulating system (25) is arranged to block a liquid flow path from the second reservoir (17) in only a first of first and second configurations of the flow regulating system (25). The second reservoir (17) is in fluid communication with one of a point upstream of the inlet (5) and a point corresponding to the retentate outlet (6) in at least the first configuration and a flow of liquid from that point to the second reservoir (17) is essentially prevented in the second configuration of the flow regulating system (25). The flow regulating system (25) is arranged to switch from the first to the second configuration when the value of the control variable falls below a value equal to at least the first value.

## Description

The invention relates to an apparatus for purifying a liquid, including:
a cross-flow filtration device having an inlet, an outlet for filtrate and an outlet for retentate;
an accumulator, including a first reservoir for receiving filtrate and a second reservoir for receiving a liquid, the accumulator including a barrier, separating the first reservoir from the second reservoir, of which at least a part is movable to reduce a pressure difference between the first and second reservoirs;
a flow regulating device, arranged, in a closed configuration, to prevent and, in an open configuration, to permit a flow of liquid from the inlet through the filtration device and the filtrate outlet to a filtrate conduit section in fluid communication with the first reservoir,
wherein the flow regulating device is arranged to switch to the open configuration when a value of a control variable drops below a first value and to switch to the closed configuration when the value rises above a second value equal to at least the first value,
the control variable corresponding to at least one of a measure of an amount of filtrate in the accumulator and a pressure of filtrate in a section of the apparatus including the first reservoir and the filtrate conduit section; and a flow regulating system, arranged to block a liquid flow path from the second reservoir in only a first of first and second configurations of the flow regulating system,
wherein the second reservoir is in fluid communication with one of a point upstream of the inlet and a point corresponding to the retentate outlet in at least the first configuration and a flow of liquid from that point to the second reservoir is essentially prevented in the second configuration of the flow regulating system.

The invention also relates to a method of operating an apparatus for purifying a liquid, including:
a cross-flow filtration device having an inlet, an outlet for filtrate and an outlet for retentate;
an accumulator, including a first reservoir for receiving filtrate and a second reservoir for receiving a liquid, the accumulator including a barrier, separating the first reservoir from the second reservoir, of which at least a part is movable to reduce a pressure difference between the first and second reservoirs;
a flow regulating device, arranged, in a closed configuration, to prevent and, in an open configuration, to permit a flow of liquid from the inlet through the filtration device and the filtrate outlet to a filtrate conduit section in fluid communication with the first reservoir; and
a flow regulating system, arranged in only a first of first and second configurations of the flow regulating system to block a liquid flow path from the second reservoir,
wherein the second reservoir is in fluid communication with one of a point upstream of the inlet and a point corresponding to the retentate outlet in at least the first configuration and a flow of liquid from that point to the second reservoir is essentially prevented in the second configuration of the flow regulating system,
wherein the method includes
switching the flow regulating device to the open configuration when an amount of filtrate in the accumulator has decreased below a first value and
switching it to the closed configuration when the amount has increased to a second value higher than the first value.

US 4,176,063 discloses a reverse-osmosis water purifier system which has no backpressure acting against the semi-permeable membrane, so that the filtering rate is maximised. Furthermore, a supply of tap water to the system is shut off automatically as soon as the pure water storage tank is full, use of water thus being greatly reduced. The system comprises a reverse-osmosis filter element; a storage tank having movable means therein to separate said tank into a pure water chamber and a squeeze chamber; means to conduct tap water under pressure to the filter element and to cause water to flow through the filter element into the pure water chamber; means to conduct waste water from the filter element to a drain, the means including proportioning means to determine the ratio of waste water to pure water; a single water conduit connected at one end to the pure water chamber and adapted to be connected at the other end to an outlet valve which controls discharge of purified water to a point of use, the water conduit being the sole conduit between the water purification system and the region of the outlet valve; means including a squeeze-control valve to conduct water under pressure to the squeeze chamber, whereby to move the movable means and thus expel purified water from the pure water chamber through the single conduit to the outlet valve, means to reduce greatly the water pressure in the squeeze chamber after closing of the squeeze-control valve, whereby to create a large pressure drop across the filter element, with consequent increased rate of filtration; means to maintain substantial water pressure in the single conduit after the reduction in water pressure in the squeeze chamber, so that purified water will flow immediately out the outlet valve upon opening thereof, means, responsive to the pressure reduction caused by the opening of the outlet valve and consequent reduction in the water pressure in the single conduit to open the squeeze-control valve and thus effect expulsion of purified water through the single conduit to a point of use; and means, responsive to filling of the storage tank with a predetermined quantity of purified water, to prevent flow of water through the proportioning means to drain, whereby to prevent loss of water after a desired amount of purified water is present. Pure water from the pure water chamber flows through a tube to a check valve. The pure water then passes through the single tube to the outlet valve. Operation of the squeeze valve is controlled by a pilot valve. The pilot and thus the squeeze valve are controlled by the above-mentioned check valve.

A problem of this arrangement is that the check valve must cause a substantial pressure drop to enable the squeeze valve to open. This means that the check valve will present quite a high flow resistance, so that the water that is dispensed is at a substantially lower pressure than the tap water.

It is an object of the invention to provide an apparatus and method of the types mentioned above in the opening paragraphs that allow filtrate to be dispensed or supplied to an appliance at a relatively high pressure, but also allow a relatively high proportion of the filtrate produced to be produced at relatively high rates and with a relatively high degree of purity.

This object is achieved according to a first aspect by the apparatus according to the invention, which is characterised in that the flow regulating system is arranged to switch from the first to the second configuration when the value of the control variable falls below a value equal to at least the first value.

The apparatus includes a cross-flow filtration device having an inlet, an outlet for filtrate and an outlet for retentate. In general, the filtration device includes at least one semi-permeable membrane for separating substances from the liquid to be purified. The liquid that passes through the at least one membrane forms the filtrate. The liquid that flows across but not through the at least one membrane forms the retentate (also referred to as concentrate). The pressure differential and membrane pore size may be sufficient to remove at least one solute from the liquid to be purified. The at least one membrane may, for example, be provided with pores having a pore size of at most 10 Å. The filtration device may include a spiral wound membrane module, a hollow fibre membrane module, a tubular membrane module and/or a membrane in sheet form mounted on a frame, for example.

The apparatus also includes an accumulator having a first reservoir for receiving filtrate. The apparatus can thus supply filtrate at a higher rate than the rate at which it is produced for at least a short period of time. The accumulator includes a second reservoir for receiving a liquid, as well as a barrier separating the first reservoir from the second reservoir, of which at least a part is movable to reduce a pressure difference between the first and second reservoirs. In this respect, it differs from accumulators including a gas-filled, closed second reservoir for pressurising the filtrate in the first reservoir. The second reservoir has at least one port in fluid communication with a liquid conduit, so that a pressurising liquid (retentate or untreated liquid as received at the inlet) can be supplied to or removed from the second reservoir so as to pressurise or depressurise the filtrate in the first reservoir. The pressure is raised to dispense the filtrate and reduced to produce the filtrate, at least as long as no filtrate is supplied to an outlet of the apparatus. Thus, a relatively large proportion of the filtrate supplied at the outlet of the apparatus will have been generated at relatively high trans-membrane pressure differentials. This gives it a relatively high degree of purity. On the other hand, filtrate can be supplied at an outlet of the apparatus at a relatively high rate. Moreover, this rate does not drop rapidly as the accumulator is emptied.

A flow regulating device is arranged in a closed configuration to prevent and in an open configuration to permit a flow of liquid from the inlet through the filtration device and the outlet for filtrate to a filtrate conduit section in fluid communication with the first reservoir. Thus, this flow regulating device controls the production of filtrate, since this flow of liquid is through the at least one membrane to the filtrate outlet. The flow regulating device is arranged to switch between the closed and open configurations in dependence on a value of a control variable. The control variable corresponds to at least one of a measure of an amount of filtrate in the accumulator and a pressure of liquid in a section of the apparatus including the first reservoir and the filtrate conduit sections. As the first reservoir empties, the pressure in the fluidly interconnected region including the first reservoir and the filtrate conduit section and any interconnecting fluid-carrying parts will drop at some point. At least at this stage, the value of the liquid pressure in this region is also a measure of the amount of filtrate in the first reservoir (another measure would be the position of the movable part of the barrier, for example). Below a certain value, the first value, the flow regulating device will switch from the closed to the open configuration. In the open configuration, the flow of liquid through the filtration device to the filtrate conduit section, and thence to the first reservoir or to a filtrate outlet of the apparatus, is enabled. In the closed configuration, it is disabled. By using such a flow regulating device to control the production of filtrate, it is possible to ensure that the first reservoir is emptied to a relatively large extent before it is replenished. This has the effect of ensuring that filtrate is not stored for a relatively long time before it is dispensed, improving the quality of the filtrate that is supplied by the apparatus. Moreover, more of the filtrate can be produced at a relatively high trans-membrane pressure differential, namely with the accumulator storing relatively little filtrate.

The flow regulating system also switches, namely between a first configuration, in which the second reservoir is in fluid communication with one of a point upstream of the inlet and a point corresponding to the retentate outlet, and a second configuration, in which a liquid flow path from the second reservoir to a downstream end of a liquid conduit for carrying away liquid is not blocked. The downstream end may be one of an outlet of the apparatus to drain, an outlet to a tank for collecting liquid for subsequent removal from the apparatus or an inlet to a recirculation conduit for conducting liquid to the inlet, for example. In the first configuration of the flow regulating system, in which the liquid flow path from the second reservoir to a downstream end of a conduit for removing liquid from at least the second reservoir is blocked, the second reservoir is pressurised. This pressure is transferred to the first reservoir. In the second configuration of the flow regulating system, in which a flow of liquid to the second reservoir from the point that is one of a point upstream of the inlet and a point corresponding to the retentate outlet is essentially prevented, the second reservoir can empty so that the first reservoir is depressurised. Because the flow regulating system, which is separate from the flow regulating device, switches from its second to its first configuration responsive to a fall in the value of the control variable below a value equal to at least the first value, it switches before or at the same time as the flow regulating device when the accumulator is emptied of filtrate. Thus, production of filtrate will not resume at relatively small trans-membrane pressure differentials. The flow regulating system may switch at a value higher than the first value. The flow regulating system is arranged to switch back from the second to the first configuration when the value of the control variable rises to a value equal to at most the second value. Thus, the accumulator is pressurised when sufficiently filled. The flow regulating system may be arranged to switch back at a lower value than the second value.

The apparatus is of especial use in settings in which small amounts of filtrate are supplied (with respect to the capacity of the first reservoir). A typical example would be where the apparatus is used to supply purified water to a coffee or espresso machine for the catering sector. Without the flow regulating device, the flow regulating system would maintain the first reservoir in the pressurised state, i.e. would not switch, but the first reservoir would be replenished (slowly) between dispenses of serving-sized amounts of water. Nearly all of the filtrate would be produced at relatively small trans-membrane pressure differentials and it would take relatively long for the filtrate in the first reservoir to be replaced by freshly produced filtrate.

Because the flow regulating system switches from its second to its first configuration when the value of the control variable falls below the second value, rather than the other way around, it responds to an emptying of the first reservoir. As long as there is sufficient filtrate in the first reservoir, the pressure is maintained. There is thus no need to provide what is essentially a flow restrictor between the first reservoir and the filtrate outlet of the apparatus, because the flow regulating system is not arranged to depressurise the first reservoir whenever there is no flow of filtrate to such an outlet. Instead, a simple conduit or a conduit with a check valve with little or no flow resistance may be provided between the first reservoir and the apparatus's filtrate outlet.

In an embodiment, the apparatus includes at least one retentate conduit of which a downstream end is placeable in fluid communication with the retentate outlet via a respective retentate flow regulating device to conduct away retentate, wherein each of the at least one retentate flow regulating devices is arranged to prevent a flow of liquid to the downstream end in a closed configuration and to enable the flow in an open configuration, and wherein each of the at least one retentate flow regulating devices is arranged to switch to the open configuration when the value falls below a value equal to at least the first value and to switch to the closed configuration when the value rises to a value equal to at most the second value.

The retentate is conducted away to one of an outlet of the apparatus to drain, an outlet to a tank for collecting liquid for subsequent removal from the apparatus or an upstream end of a recirculation conduit for conducting liquid to the inlet. In this embodiment, retentate is not wasted when no filtrate is produced. The apparatus is arranged to prevent any flow of retentate out of the apparatus at least when the value of the control variable is higher than the second value. It may, for example, be configured such that retentate from the retentate outlet can leave the apparatus only through the at least one retentate conduit of which a downstream end is placeable in fluid communication with the retentate outlet via a respective retentate flow regulating device. The threshold value at which the flow regulating device switches to the open configuration may be the same as that at which it switches to the closed configuration, just as the first value may be equal to the second value.

In a variant of this embodiment, the liquid flow path from the second reservoir extends through at least one of the retentate flow regulating devices, which is included in the flow regulating system and arranged to be in the closed configuration in the first and in the open configuration in the second configuration of the flow regulating system.

In this variant, the second reservoir is arranged to receive retentate in order to pressurise the first reservoir. For depressurising the second, and thus also the first, reservoir, retentate is released through a section of the retentate conduit extending to the retentate flow regulating device. Relatively few and relatively simple valves are required to implement this variant. Moreover, the second reservoir may have a single port. An interconnection between this port and the retentate conduit is provided. The retentate flow regulating device is arranged downstream of the location at which the interconnection joins the retentate conduit. Thus, when filtrate production is to cease, the retentate flow regulating device is moved to the closed configuration. This ends both the flow of retentate to drain or a tank for removing the retentate from the apparatus and blocks any flow of retentate out of the second reservoir. Rather, a last amount of retentate flows in the other direction through the interconnection to increase the pressure in the second reservoir and thus in the first reservoir.

In a variant, the apparatus includes at least one actuating fluid conduit for placing a port of a retentate flow regulating device included in the retentate flow regulating system in fluid communication with a device for sensing the pressure of filtrate in the section of the apparatus including the first reservoir and the filtrate conduit section, and the retentate flow regulating device is actuated by fluid in this conduit.

The pressure of the filtrate in the section of the apparatus thus forms the control variable for the retentate flow regulating device. Because an actuating fluid conduit is used, there is no need for sensors for generating a signal for an electronic control unit, nor need an actuator of the retentate flow regulating device be powered electrically.

In a particular variant, the actuating fluid conduit is arranged to receive the filtrate.

The device for sensing the pressure of filtrate may be a simple T-junction in this embodiment. Because filtrate is used to actuate the retentate flow regulating device, there is no need for transducers for converting the pressure of the filtrate into a pressure of a different working fluid. The filtrate is relatively free of substances that might have a negative effect on the lifespan of the retentate flow regulating device, making it suitable for use as a working fluid.

An embodiment of the apparatus includes a suction device having a suction inlet, in fluid communication with the second reservoir and arranged to draw liquid from the second reservoir only when the flow regulating system is in the second of the first and second configurations.

The suction device is arranged to create an underpressure in the second reservoir. The trans-membrane pressure differential is thus relatively high when filtrate is being produced. The first reservoir is not filled against a substantial backpressure. Furthermore, the pressure in the section of the apparatus including the first reservoir and the filtrate conduit section forms a relatively reliable indicator of the amount of filtrate accumulated in the first reservoir. The flow regulating device and flow regulating system can thus be controlled by this variable, switching to cease production of filtrate only when the first reservoir is sufficiently filled with filtrate. A further effect is to increase the reliability with which the flow regulating system and the flow regulating device switch together. When the flow regulating device switches to the closed configuration with the suction device still operational and the flow regulating system in the second configuration, the suction device will draw liquid from the second reservoir, but the first reservoir will no longer be filled commensurately. The pressure will thus drop relatively sharply, and the flow regulating system will switch at the latest in response to this drop. Conversely, when the pressure in the first reservoir drops because filtrate is being supplied by the apparatus and the flow regulating system switches first (being configured to switch from the first to the second configuration when the value of the control variable falls below a value equal to at least the first value), the suction device will become operational and further reduce the pressure in the first reservoir relatively rapidly. The flow regulating device controlling the production of filtrate will switch to the open configuration at the latest at this stage.

In a variant of this embodiment, the suction device is arranged to use a retentate flow through the suction device to pump liquid from the second reservoir.

There is thus no need to provide a separate electrical power supply for the suction device. It is powered by the motive energy of the retentate flow. Indeed, if the pressure of untreated liquid supplied to the apparatus is high enough, electrically powered pumps can be dispensed with altogether.

In variant, the suction device is arranged to pump the liquid from the second reservoir by direct contact between the liquid and the retentate flowing through the suction device.

This variant is relatively simple and cheap to implement. It has few moving parts. The suction device may be a jet pump, for example. Liquid from the second reservoir is entrained by the flow of retentate through the suction device. This flow may in particular create a zone of low pressure, for example because the suction device includes a convergent-divergent nozzle.

In a variant, the apparatus includes at least one retentate conduit of which a downstream end is placeable in fluid communication with the retentate outlet via a respective retentate flow regulating device included in the flow regulating system, which retentate flow regulating device is arranged to prevent a flow of liquid to the downstream end in the first configuration and to enable the flow of liquid in the second configuration, and the retentate flow through the suction device is conducted through at least one of the retentate conduits.

This is a relatively simple and reliable way of ensuring that the suction device draws liquid from the second reservoir only when the flow regulating system is in the second of the first and second configurations. In effect, the suction device is controlled by the flow of retentate. If the suction device is arranged to pump the liquid from the second reservoir by direct contact between the liquid and the retentate flowing through the suction device and the retentate flow regulating device is arranged downstream of the suction device, then interrupting the flow of retentate will cause the retentate to flow in the opposite direction through the suction inlet to the second reservoir. Thus, this variant will ensure with a minimum of valves and conduits that the second reservoir is pressurised in the first configuration of the flow regulating system and that retentate is drawn from the second reservoir in the second configuration of the flow regulating system. All this can be achieved without electronic signal-ling.

In an embodiment of the apparatus, the flow regulating device for permitting and preventing the flow of liquid from the inlet to the filtrate conduit section in fluid communication with the first reservoir is arranged downstream of the filtrate outlet of the filtration device.

In this embodiment, it is possible to use the liquid from the retentate outlet for pressurising the second reservoir when the flow regulating device is in the closed configuration and the flow regulating system is in the first configuration. If the flow regulating device were to be situated upstream of the filtration device, this would not be possible, because the flow of liquid from the inlet to the retentate outlet would also be blocked in the closed configuration. Where the untreated liquid is used to pressurise the second reservoir, this embodiment obviates the need for a separate conduit with a separately controlled valve from upstream of the flow regulating device to the second reservoir.

In an embodiment of the apparatus, the apparatus includes an actuating fluid conduit for placing a port of the flow regulating device for permitting and preventing the flow of liquid from the inlet to the filtrate conduit section in fluid communication with a device for sensing the pressure of filtrate in the section of the apparatus including the first reservoir and the filtrate conduit section, and the flow regulating device is actuated by fluid in this conduit.

This embodiment is suitable for implementing the apparatus such that an electrical power supply is dispensed with. At least an electrically powered actuator for the flow regulating device is not required.

In a variant of this embodiment, the actuating fluid conduit is arranged to receive the filtrate.

The device for sensing the pressure of the filtrate may be a simple T-junction in this embodiment. Because the filtrate is used to actuate the flow regulating device, there is no need for transducers for converting the pressure of the filtrate into a pressure of a different working fluid. The filtrate is relatively free of substances that might have a negative effect on the lifespan of the flow regulating device, making it suitable for use as a working fluid.

In an embodiment of the apparatus, the second value is higher than the first value.

This embodiment ensures that the first reservoir is filled to a first level when filtrate is produced but emptied by a relatively large amount before filtrate production is resumed. Moreover, this amount can be controlled relatively precisely. More filtrate can be produced at high trans-membrane pressure differentials, when the first reservoir is emptied to a relatively large extent. The flow regulating system is arranged to switch between the first and second configurations at switching points corresponding to values within a range extending from the first up to and including the second value, so that the flow regulating system switches together with or before the flow regulating device as the value of the control variable increases or decreases to the second or first value respectively.

Thus, in an embodiment, the flow regulating system is arranged to switch from the second to the first configuration when the value of the control variable rises above a value equal to at most the second value.

In an embodiment, the flow regulating system is controlled by the control variable independently of the flow regulating device for permitting and preventing the flow of liquid from the inlet to the filtrate conduit section.

Thus, in this embodiment, the flow regulating system and the flow regulating device are each directly controlled by a signal representative of the control variable, which may be a hydraulic pressure signal. The flow regulating system does not respond to the flow regulating device or vice versa. The flow regulating device and system can thus be implemented relatively straightforwardly using standard valves, e.g. hydraulically actuated valves.

According to another aspect, the method of operating an apparatus for purifying a liquid according to the invention is characterised by causing the flow regulating system to switch at the latest simultaneously with the flow regulating device from the first to the second configuration when the amount of filtrate in the accumulator has decreased and from the second to the first configuration when the amount has increased.

Thus, it is the amount of filtrate in the accumulator that controls the flow regulating system, rather than whether filtrate is being consumed.

In an embodiment of the method, the second value is equal to at most the pressure of the liquid at that one of the point upstream of the inlet and the point corresponding to the retentate outlet with which the second reservoir is in fluid communication in at least the first configuration.

Assuming that the filtrate pressure in the section including the first reservoir and the filtrate conduit section controls the switching of the flow regulating device, it is ensured that filtrate production ceases at a lower pressure level than the highest possible prevailing pressure when the flow regulating system is in the first configuration.

In an embodiment of the method, the apparatus is an apparatus according to the invention.

The invention will be explained in further detail with reference to the accompanying drawings, in which:
- Fig. 1: is a diagram of an apparatus for filtering a liquid;
- Fig. 2: is a schematic cross-section of a suction device for use in the apparatus of Fig. 1; and
- Fig. 3: is a schematic cross-section of an alternative suction device for use in the apparatus of Fig. 1.

An apparatus for purifying a liquid includes an inlet 1 for receiving a liquid to be purified. In an embodiment, the inlet 1 is configured for connection to the mains water supply. The apparatus further includes an outlet 2 for supplying filtrate to an appliance 3 connected directly or indirectly to the outlet 2. In an alternative embodiment, the outlet 2 is configured as a tap or other type of device for dispensing filtrate into a vessel (not shown).

The apparatus includes a filtration device 4. The filtration device 4 is a membrane device, arranged for operation in cross-flow mode. It thus includes at least one membrane for separating substances from the liquid to be purified. The liquid that passes through the at least one membrane forms the filtrate. The liquid that flows tangentially across, but not through, the at least one membrane forms retentate (also referred to as concentrate). The or each membrane may be included in a spiral wound, hollow fibre or tubular membrane module, or it may be present in sheet form on a frame.

The example of a method of purifying a liquid by reverse osmosis will be used herein. In other embodiments, the membrane or membranes are arranged for microfiltration, ultrafiltration or nanofiltration. Thus, the filtration device 4 may be suitable for purifying a liquid by removing suspended particles and at least one solute or only for removing suspended particles.

The filtration device 4 is provided with a filtration device inlet 5, an outlet 6 for retentate and an outlet 7 for filtrate. The liquid purification apparatus as a whole is configured such that the purification process is driven exclusively by the pressure differential between the inlet 1 and the filtrate outlet 7. It is thus arranged to function in the absence of any external energy supply, e.g. to power a pump.

The filtrate outlet 7 is connected to the outlet 2 of the apparatus by a filtrate conduit 8. The filtrate conduit 8 includes a first filtrate conduit section 9 between the filtrate outlet 7 and an hydraulically actuated filtrate valve 10, and a second filtrate conduit section 11 between the hydraulically actuated filtrate valve 10 and an optional shutoff valve 12. A conduit section 13 connects the filtrate conduit 8, more particularly the second filtrate conduit section 11, to a first port 14 of an hydraulic accumulator 15.

The accumulator 15 includes a first reservoir 16 for receiving filtrate and a second reservoir 17 for receiving retentate. The first port 14 provides a fluid connection to the first reservoir 16. The accumulator 15 includes a second port 18, providing a fluid connection to the second reservoir 17. The accumulator 15 includes a relatively rigid tank 19, in which the ports 14,18 are provided, and a flexible barrier 20. The barrier 20 divides the tank 19 into the first and second reservoirs 16,17. In one embodiment, the barrier 20 forms a bladder. An interior of the bladder forms one of the first and second reservoirs 16,17, with the space between the tank 19 and the bladder forming the other of the first and second reservoirs 16,17. In another embodiment, the flexible barrier 20 is formed by an impermeable membrane sealingly attached at its edge or edges to the tank 19 or to an edge of an aperture in a partitioning wall in the tank 19. The membrane may be constituted as bellows. In an alternative embodiment, a piston is used instead of the flexible barrier 20. Thus, at least a part of the barrier 20 is movable with respect to the tank 19 when subjected to a pressure differential between the first and second reservoirs 16,17. The movement is such as to reduce the pressure difference between the first and second reservoirs 16,17.

In the illustrated embodiment, the shutoff valve 12 is arranged in the filtrate conduit 8 between the point at which the conduit section 13 connecting the filtrate conduit 8 branches off and the outlet 2 for connecting the apparatus to the appliance 3. The shutoff valve 12 will generally only be closed by an operator or service technician when disconnecting the appliance 3.

The hydraulically actuated filtrate valve 10 controls the production of filtrate. It is switchable between an open configuration, in which a flow of liquid from the filtration device inlet 5 through the membrane or membranes to the filtrate outlet 7 and the first filtrate conduit section 9 to the second filtrate conduit section 11 is enabled, and a closed configuration, in which this flow of liquid is blocked. The hydraulically actuated filtrate valve is controlled by the pressure at a point in an interconnected fluid-carrying section of the apparatus that includes the first reservoir 16, the second filtrate conduit section 11 and the connecting conduit section 13. At this point, a port to a first pressure transfer conduit 21 is provided. The first pressure transfer conduit 21 carries filtrate to a port of the hydraulically actuated filtrate valve 10 to enable the filtrate in the first pressure transfer conduit 21 to actuate the valve 10. Thus, the valve 10 is directly actuated by the filtrate. In an alternative embodiment, the valve 10 is actuated by a fluid isolated from the filtrate, wherein a device for sensing the pressure of the filtrate and transmitting this pressure at a certain ratio (which may be 1:1) to the actuating fluid is provided. In either case, electronic control circuits are dispensed with.

The valve 10 switches from the closed to the open configuration when the controlling pressure decreases below a first pre-set value. It switches from the open to the closed configuration when the controlling pressure increases to above a second pre-set value. The second pre-set value may be higher than the first pre-set value. Since the pressure as sampled by means of the first pressure transfer conduit 21 is representative of the amount of filtrate in the accumulator 15, filtrate production is commenced when the amount drops below a certain value and ceases when it increases to above a certain, higher value. As will become apparent, it is not absolutely necessary for the first and second pressure values to differ, because the apparatus includes a flow regulating system that ensures that the pressure decreases further once it has decreased to the first value. A certain amount of filtrate will in any case need to be produced before the hydraulically actuated filtrate valve switches again. The filtrate pressure will generally differ only slightly within the section of the apparatus formed by the second filtrate conduit section 11, the connecting conduit section 13 and the first reservoir 16. In an embodiment, however, the first pressure transfer conduit 21 extends to a port in the accumulator 15 in fluid communication with the first reservoir 16. In another embodiment, the first pressure transfer conduit 21 is dispensed with and the hydraulically actuated filtrate valve is controlled by the filtrate pressure directly downstream of a valve element (not shown) for interrupting a flow path through the valve 10. This embodiment still differs from a check valve or biased check valve, in that the configuration of the valve 10 is independent of the pressure at the filtrate outlet 7.

The retentate outlet 6 of the filtration device 4 is connected to a retentate conduit including a first retentate conduit section 22, leading from the retentate outlet 6 to a suction device 23, a second retentate conduit section 24, leading from an outlet of the suction device 23 to an hydraulically actuated retentate valve 25, and a third retentate conduit section 26, leading from the hydraulically actuated retentate valve 25 to a drain 27. The hydraulically actuated retentate valve 25 forms a flow regulating system.

A conduit section 28 connects the second port 18 of the accumulator 15 to a suction inlet 29 of the suction device 23. The second reservoir 17 is thus in fluid communication with the suction inlet 29. The suction device 23, when operational, is arranged to draw liquid from the second reservoir 17 whenever retentate flows through retentate conduit. When no retentate is flowing through the retentate conduit, the suction inlet 29 and the connecting conduit section 28 place the second reservoir 17 in fluid communication with the first retentate conduit section 22.

The suction device 23 is arranged to use the retentate flow through the suction device 23 to pump liquid from the second reservoir 17. There is thus no need for an external power source. Rather, the suction device 23 is a pump in which the retentate drawn from the second reservoir 17 is pumped through the suction device 23 by direct contact with the retentate flowing from the first retentate conduit section 22 to the second retentate conduit section 24 through the suction device 23.

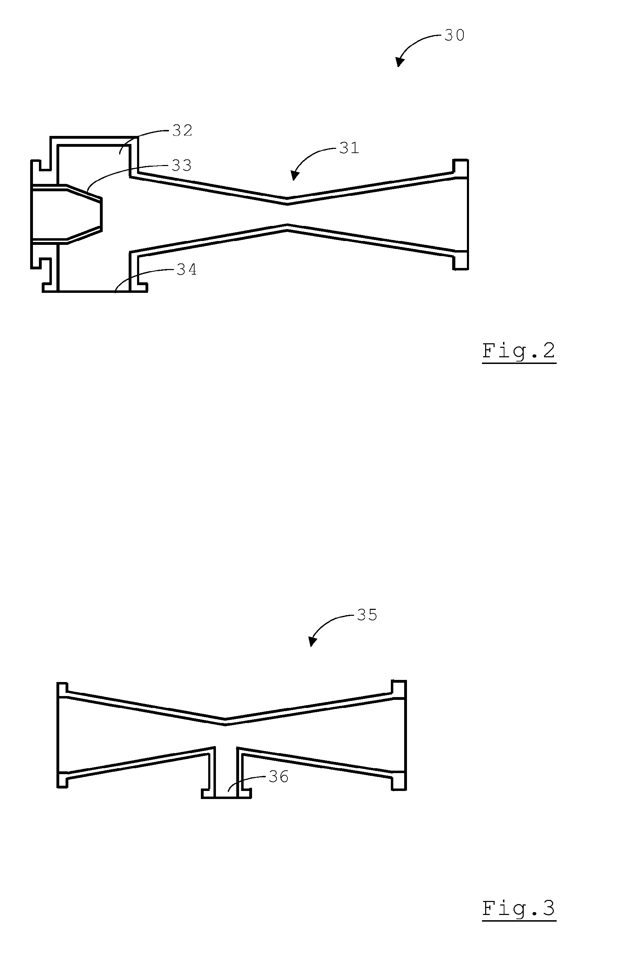

In a first embodiment (Fig. 2), the suction device 23 includes an ejector 30, including a convergent-divergent nozzle 31 for creating a zone of low pressure downstream of a chamber 32 into which a nozzle 33 protrudes. The chamber is provided with a port 34 for forming the suction inlet 29 of the suction device 23. The liquid from the second reservoir is entrained by the flow of liquid through the nozzle 33, partly by a zone of low pressure created in the convergent-divergent nozzle 31 and partly by the transfer of momentum from the jet of liquid emanating from the nozzle 33 projecting into the chamber 32.

In a second embodiment (Fig. 3), the suction device 23 includes a straightforward Venturi-device 35, with the suction inlet 36 joining a convergent-divergent nozzle at a throat of the latter.

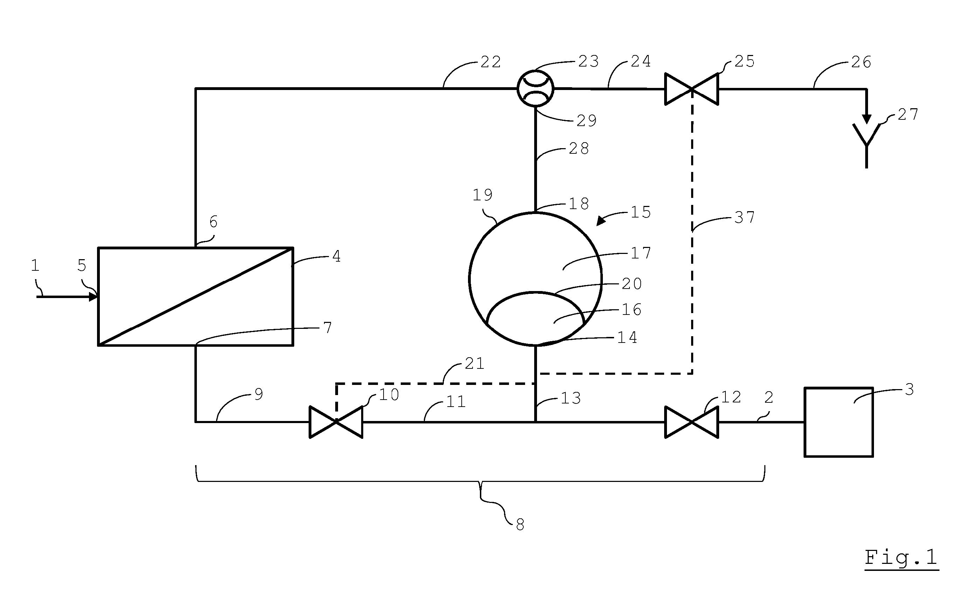

The underpressure generated by the suction device 23 (Fig. 1) lowers the pressure in the first reservoir 16 to increase the pressure differential between the inlet 5 and the filtrate outlet 7, and thus the trans-membrane pressure, whenever the retentate flows through the retentate conduit. This increases the speed with which the first reservoir 16 is filled. Furthermore, the purity of the filtrate is improved. The effect is enhanced by controlling the operation of the apparatus such that the production of filtrate is interrupted when the accumulator 15 is filled with filtrate to a certain level, which may be close to its maximum capacity, and then emptied to a lower level before the production of filtrate is resumed. Thus, more filtrate is produced at relatively high trans-membrane pressure differentials.

The flow regulating system formed by the hydraulically actuated retentate valve 25 essentially provides this effect, with the hydraulically actuated filtrate valve 10 ensuring that the retentate valve 25 switches.

The hydraulically actuated retentate valve 25 is controlled by the pressure of liquid at a point in a fluidly interconnected region including the first reservoir 16, the connecting conduit section 13 and the second filtrate conduit section 11. In the illustrated embodiment, a second pressure transfer conduit 37 places a port of the hydraulically actuated retentate valve 25 in direct fluid communication with the conduit section 13 connecting the first reservoir 16 to the second filtrate conduit section 11. Thus, the valve 25 is directly actuated by the filtrate. In an alternative embodiment, the valve 25 is actuated by a fluid isolated from the filtrate, wherein a device for sensing the pressure of the filtrate and transmitting this pressure at a certain ratio (which may be 1:1) to the actuating fluid is provided. In either case, electronic control circuits are dispensed with.

The hydraulically actuated retentate valve 25 is arranged to move from an open to a closed configuration when the filtrate pressure exceeds a certain value. In the closed configuration, a liquid flow path from the second reservoir 17 through at least the third retentate conduit section 26 is blocked. The suction device 23, more particularly the suction inlet 29 places the second reservoir 17 in fluid communication with the retentate outlet 6. As a consequence, when the hydraulically actuated retentate valve 25 switches from the open to the closed configuration, the pressure in the second reservoir 17 rises relatively quickly from a value corresponding to an underpressure to a value essentially equal to the pressure at the inlet 5 of the filtration device 4. The hydraulically actuated filtrate valve 10 also switches to its closed configuration. This ensures that small amounts of filtrate withdrawn by the appliance 3 are not replaced by new filtrate with the hydraulically actuated retentate valve 25 still in the closed configuration. The hydraulically actuated filtrate valve 10 prevents such replacement.

The hydraulically actuated filtrate valve 10 remains closed until the hydraulically actuated retentate valve 25 has opened. The hydraulically actuated retentate valve 25 is arranged to move from the closed to an open configuration when the filtrate pressure drops below a certain value. The liquid flow path from the second reservoir 17 to the third retentate conduit section 26 is then no longer blocked. Also, the flow of retentate from the retentate outlet 6 through the retentate conduit is then resumed. The suction device 23 then starts to draw liquid from the second reservoir 17, so that a flow of liquid from the retentate outlet 6 to the second reservoir 17 is prevented. The pressure in the second reservoir 17 drops quite quickly. The pressure in the first reservoir 16 then also drops. At the latest at this stage, the hydraulically actuated filtrate valve 10 then opens. The production of filtrate is resumed.

In principle, the hydraulically actuated filtrate valve 10 and the hydraulically actuated retentate valve 25 may each have essentially one pre-set switching point at which they switch, both when the controlling pressure increases and when the controlling pressure decreases. The pre-set switching point of the hydraulically actuated filtrate valve 10 will then generally be the same as or slightly lower than that of the hydraulically actuated retentate valve 25. When the first reservoir 16 is emptied, the retentate valve 25 will switch first. This causes a further drop in pressure, whereupon the filtrate valve 10 switches to enable filtrate production to commence.

In the present example, at least the hydraulically actuated filtrate valve 10 exhibits hysteresis, switching from the open to the closed configuration at a different value of the control variable than from the closed to the open configuration. The switching points are such as to ensure that the hydraulically actuated retentate valve 25 switches first. For the hydraulically actuated filtrate valve 10 the switch from the open to the closed configuration will occur at a higher value than the switch from the closed to the open configuration. The higher value is higher than the switching value of the hydraulically actuated retentate valve 25, but lower than the pressure of liquid supplied to the filtration device inlet 5. Thus, when the filtrate pressure increases, the hydraulically actuated retentate valve 25 will close first. This causes the pressure in the second reservoir 17 to rise further. The increase is to a value approximately equal to the pressure at the filtration device inlet 5, which value is transferred to the filtrate via the barrier 20. It is thus sufficient to ensure that the filtrate valve 10 also closes.

It is noted that the production and dispensing of filtrate is essentially controlled by the flow of filtrate through the outlet 2. Electronic interfaces for providing a control signal to the apparatus are not required. In particular, no signals need be exchanged between the appliance 3 and a control device of the apparatus. The appliance 3 is supplied with filtrate at a relatively high pressure approaching the pressure of the liquid at the inlet 1 due to the fact that the retentate valve 25 is in the closed configuration when filtrate is being supplied from the accumulator 15 whereas the first retentate conduit section 22 remains in fluid communication with the connecting conduit section 28 via the suction device 23.

The invention is not limited to the embodiments described above, which may be varied within the scope of the accompanying claims. For example, the measure of the amount of filtrate in the first reservoir 16 of the accumulator 15 may be a different one than the filtrate pressure. It may for instance be a measure of the displacement of the barrier 20 or at least the movable part thereof. The retentate need not necessarily flow to the drain 27, but may be collected and put to some useful purpose.

The flow regulating system may be a valve, but it could be a different type of device, e.g. a positive displacement machine or the like. The suction device may thus be comprised in the flow regulating system.

### List of reference numerals

- 1: - inlet
- 2: - outlet
- 3: - appliance
- 4: - filtration device
- 5: - filtration device inlet
- 6: - retentate outlet
- 7: - filtrate outlet
- 8: - filtrate conduit
- 9: - first filtrate conduit section
- 10: - hydraulically actuated filtrate valve
- 11: - second filtrate conduit section
- 12: - shutoff valve
- 13: - connecting conduit section
- 14: - first port
- 15: - accumulator
- 16: - first reservoir
- 17: - second reservoir
- 18: - second port
- 19: - tank
- 20: - barrier
- 21: - first pressure transfer conduit
- 22: - first retentate conduit section
- 23: - suction device
- 24: - second retentate conduit section
- 25: - hydraulically actuated retentate valve
- 26: - third retentate conduit section
- 27: - drain
- 28: - connecting conduit section
- 29: - suction inlet
- 30: - ejector
- 31: - convergent-divergent nozzle
- 32: - chamber
- 33: - nozzle in chamber
- 34: - chamber port
- 35: - Venturi device
- 36: - suction inlet of venture device
- 37: - second pressure transfer conduit

## Claims

1. Apparatus for purifying a liquid, including:
a cross-flow filtration device (4) having an inlet (5), an outlet (7) for filtrate and an outlet (6) for retentate;
an accumulator (15), including a first reservoir (16) for receiving filtrate and a second reservoir (17) for receiving a liquid, the accumulator (15) including a barrier (20), separating the first reservoir (16) from the second reservoir, of which at least a part is movable to reduce a pressure difference between the first and second reservoirs (16, 17);
a flow regulating device (10), arranged, in a closed configuration, to prevent and, in an open configuration, to permit a flow of liquid from the inlet (5) through the filtration device (4) and the filtrate outlet (7) to a filtrate conduit section (11,13) in fluid communication with the first reservoir (16),
wherein the flow regulating device (10) is arranged to switch to the open configuration when a value of a control variable drops below a first value and to switch to the closed configuration when the value rises above a second value equal to at least the first value,
the control variable corresponding to at least one of a measure of an amount of filtrate in the accumulator (15) and a pressure of filtrate in a section of the apparatus including the first reservoir (16) and the filtrate conduit section (11,13); and
a flow regulating system (25), arranged to block a liquid flow path from the second reservoir (17) in only a first of first and second configurations of the flow regulating system (25),
wherein the second reservoir (17) is in fluid communication with one of a point upstream of the inlet (5) and a point corresponding to the retentate outlet (6) in at least the first configuration and a flow of liquid from that point to the second reservoir (17) is essentially prevented in the second configuration of the flow regulating system (25), **characterised in that**
the flow regulating system (25) is arranged to switch from the first to the second configuration when the value of the control variable falls below a value equal to at least the first value.

2. Apparatus according to claim 1,
wherein the apparatus includes at least one retentate conduit (22,24,26) of which a downstream end is placeable in fluid communication with the retentate outlet (6) via a respective retentate flow regulating device (25) to conduct away retentate,
wherein each of the at least one retentate flow regulating devices (25) is arranged to prevent a flow of liquid to the downstream end in a closed configuration and to enable the flow in an open configuration, and
wherein each of the at least one retentate flow regulating devices (25) is arranged to switch to the open configuration when the value falls below a value equal to at least the first value and to switch to the closed configuration when the value rises to a value equal to at most the second value.

3. Apparatus according to claim 2,
wherein the liquid flow path from the second reservoir (17) extends through at least one of the retentate flow regulating devices, which is included in the flow regulating system (25) and arranged to be in the closed configuration in the first and in the open configuration in the second configuration of the flow regulating system (25).

4. Apparatus according to any one of the preceding claims,
wherein the apparatus includes at least one actuating fluid conduit (37) for placing a port of a retentate flow regulating device (25) included in the retentate flow regulating system in fluid communication with a device for sensing the pressure of filtrate in the section of the apparatus including the first reservoir (16) and the filtrate conduit section (11,13), and
wherein the retentate flow regulating device (25) is actuated by fluid in this conduit (37).

5. Apparatus according to any one of the preceding claims, including
a suction device (23;30;35) having a suction inlet (29;34;36), in fluid communication with the second reservoir (17) and arranged to draw liquid from the second reservoir (17) only when the flow regulating system (25) is in the second of the first and second configurations.

6. Apparatus according to claim 5,
wherein the suction device (23;30;35) is arranged to use a retentate flow through the suction device (23;30;35) to pump liquid from the second reservoir (17).

7. Apparatus according to claim 6,
wherein the suction device (23;30;35) is arranged to pump the liquid from the second reservoir (17) by direct contact between the liquid and the retentate flowing through the suction device (23;30;35).

8. Apparatus according to claim 6 or 7,
wherein the apparatus includes at least one retentate conduit (22,24,26) of which a downstream end is placeable in fluid communication with the retentate outlet (6) via a respective retentate flow regulating device (25) included in the flow regulating system (25),
which retentate flow regulating device (25) is arranged to prevent a flow of liquid to the downstream end in the first configuration and to enable the flow of liquid in the second configuration, and
wherein the retentate flow through the suction device (23;30;35) is conducted through at least one of the retentate conduits (22,24,26).

9. Apparatus according to any one of the preceding claims,
wherein the flow regulating device (10) for permitting and preventing the flow of liquid from the inlet (5) to the filtrate conduit section (11,13) in fluid communication with the first reservoir (16) is arranged downstream of the filtrate outlet (7) of the filtration device (4).

10. Apparatus according to any one of the preceding claims,
wherein the apparatus includes an actuating fluid conduit (21) for placing a port of the flow regulating device (10) for permitting and preventing the flow of liquid from the inlet (5) to the filtrate conduit section (11,13) in fluid communication with a device for sensing the pressure of filtrate in the section of the apparatus including the first reservoir (16) and the filtrate conduit section (11,13), and
wherein the flow regulating device (10) is actuated by fluid in this conduit (21).

11. Apparatus according to any one of the preceding claims,
wherein the second value is higher than the first value.

12. Apparatus according to any one of the preceding claims,
wherein the flow regulating system (25) is arranged to switch from the second to the first configuration when the value of the control variable rises above a value equal to at most the second value.

13. Method of operating an apparatus for purifying a liquid, including:
a cross-flow filtration device (4) having an inlet, an outlet (7) for filtrate and an outlet (6) for retentate;
an accumulator (15), including a first reservoir (16) for receiving filtrate and a second reservoir (17) for receiving a liquid, the accumulator (15) including a barrier (20), separating the first reservoir (16) from the second reservoir (17), of which at least a part is movable to reduce a pressure difference between the first and second reservoirs (16,17);
a flow regulating device (10), arranged, in a closed configuration, to prevent and, in an open configuration, to permit a flow of liquid from the inlet (5) through the filtration device (4) and the filtrate outlet (7) to a filtrate conduit section (11,13) in fluid communication with the first reservoir (16); and
a flow regulating system (25), arranged in only a first of first and second configurations of the flow regulating system (25) to block a liquid flow path from the second reservoir (17),
wherein the second reservoir (17) is in fluid communication with one of a point upstream of the inlet (5) and a point corresponding to the retentate outlet (6) in at least the first configuration and a flow of liquid from that point to the second reservoir (17) is essentially prevented in the second configuration of the flow regulating system (25),
wherein the method includes
switching the flow regulating device (10) to the open configuration when an amount of filtrate in the accumulator (15) has decreased below a first value and switching it to the closed configuration when the amount has increased to a second value higher than the first value,
**characterised by**
causing the flow regulating system (25) to switch at the latest simultaneously with the flow regulating device (10) from the first to the second configuration when the amount of filtrate in the accumulator (15) has decreased and from the second to the first configuration when the amount has increased.

14. Method according to claim 13,
wherein the second value is equal to at most the pressure of the liquid at that one of the point upstream of the inlet (5) and the point corresponding to the retentate outlet (6) with which the second reservoir (17) is in fluid communication in at least the first configuration.

15. Method according to claim 13 or 14,
wherein the apparatus is an apparatus according to any one of claims 1-12.
